# EUROPÄISCHE PATENTSCHRIFT

(11) **EP 4 097 035 B1**
(45) Veröffentlichungstag und Bekanntmachung des Hinweises auf die Patenterteilung: **29.05.2024**
(21) Anmeldenummer: 21700783.0
(22) Anmeldetag: 20.01.2021
(51) Int. Cl.: B65G 47/90

(54) **GREIFER FÜR EINE KOMMISSIONIERVORRICHTUNG UND VERFAHREN ZUM BETREIBEN DER KOMMISSIONIERVORRICHTUNG**
PICKING DEVICE GRIPPER AND METHOD FOR OPERATING THE PICKING DEVICE
PRÉHENSEUR POUR UN DISPOSITIF DE PRÉPARATION DE COMMANDES ET PROCÉDÉ DE FONCTIONNEMENT DU DISPOSITIF DE PRÉPARATION DE COMMANDES

(30) Priorität: 27.01.2020 EP 20153879
(43) Veröffentlichungstag der Anmeldung: 07.12.2022
(73) Patentinhaber: Becton Dickinson Rowa Germany GmbH, 53539 Kelberg (DE)
(72) Erfinder: BROKONIER, Stephan, 54570 Neroth (DE); SCHMIDT-ELLINGER, Hardy, 54568 Gerolstein-Bewingen (DE); NELLINGER, Bernd, 54413 Beuren (DE); GROSS, Dietmar, 53539 Kelberg (DE); DAUMEN, Jochen, 56220 Urmitz (DE)
(74) Vertreter: Zenz Patentanwälte Partnerschaft mbB
(86) Internationale Anmeldenummer: PCT/EP2021/051196
(87) Internationale Veröffentlichungsnummer: WO 2021/151757

(56) Entgegenhaltungen:
- EP-A1- 2 620 391
- US-A1- 2019 022 855

## Beschreibung

Die vorliegende Erfindung betrifft einen Greifer für eine Kommissioniervorrichtung für Stückgüter, insbesondere Arzneimittelpackungen, und ein Verfahren zum Betreiben der Kommissioniervorrichtung, insbesondere zum Verifizieren eines Bewegens von Arzneimittelpackungen auf einen Ablagetisch eines solchen Greifers.

Bei bekannten Greifern von Bediensystemen für Kommissioniervorrichtungen für Arzneimittelpackungen ist die Ent- und Beladestirnseite des Ablagetisches des Greifers gerade ausgebildet. Diese Stirnseite wird zum Bewegen von Arzneimittelpackungen auf oder von dem Ablagetisch an einen Ablageort herangefahren, wobei der Ablageort beispielsweise ein Regalfach oder ein Förderband zum Bewegen von Arzneimittelpackungen in die oder aus der Kommissioniervorrichtung sein kann. Dazu kann der Greifer mit seinem Ablagetisch entlang der Längsachse des Ablagetisches frontal an den Ablageort heranbewegt werden. Alternativ kann der Greifer zum Annähern des Ablagetisches an den Ablageort geschwenkt bzw. gedreht werden. Die gerade Stirnseite bedingt dann bei Durchführen lediglich einer Dreh- bzw. Schwenkbewegung, dass ein Spalt zwischen der Stirnseite und dem Ablageort verbleibt, wobei die Breite des Spaltes abhängig von der Breite des Ablagetisches ist. Bei Verwendung von größeren Greifern mit dementsprechend breiten Ablagetischen wird dieser Spalt zunehmend breiter, so dass es in einem solchen Fall notwendig wird, nach dem Schwenken bzw. Drehen des Greifers den Spalt durch Verfahren des Greifers zu verkleinern. Alternativ kann man die Stirnseite des Ablagetisches gebogen ausbilden. Dies bedingt, dass nach einer Schwenk- bzw. Drehbewegung zum Positionieren des Greifers zumindest in der Mitte der gebogenen Stirnseite der Spalt geringer ist, jedoch zu den Seiten des Ablagetisches zunimmt.

Aus der EP 2 620 391 A1 ist ein Verfahren zum Auslagern von Arzneimittelpackungen aus einer Kommissioniervorrichtung sowie auch der Oberbegriff des Anspruchs 1 bekannt, bei welchem mittels eines Sensors geprüft wird, ob zum Auslagern der Arzneimittelpackungen verwendete Greifer optimal an den Lagerplätzen zugeordneten Regalböden ausgerichtet sind, um ein Hängenbleiben der Arzneimittelpackungen an einer ggf. zu hoch angeordneten Greiferkante zu verhindern.

Bei dem Bewegen von Arzneimittelpackungen von einem Ablageort auf den Ablagetisch kann es vorkommen, dass die Arzneimittelpackung an dem Spalt zwischen dem Ablageort und der Stirnseite des Ablagetisches hängen bleibt und lediglich teilweise auf den Ablagetisch gezogen wird. Dies wird bei bekannten Greifern mit gerader Stirnseite dadurch detektiert, dass bei der einem Ablageort zugewandten Stirnseite des Ablagetisches eine Lichtschranke angeordnet ist, die ein Liegenbleiben von Arzneimittelpackungen detektieren kann.

In Abhängigkeit von der Ausbildung der gebogenen Stirnseite verbleibt jedoch ein Abschnitt des Ablagetisches, der mit einer Lichtschranke nicht erfasst werden kann, da diese in den Bereichen des Ablagetisches angeordnet sein muss, in denen dieser noch nicht gebogen ist. Dies bedingt, dass solche Fehlauslagerungen, die nicht bis in den Detektionsbereich der Lichtschranke hineinreichen, nicht erkannt werden und das Bediengerät von einer fehlerfreien Bewegung einer Arzneimittelpackung auf den Greifer ausgeht, obwohl die Arzneimittelpackung teilweise in dem gebogenen Bereich der Stirnseite des Ablagetisches aufliegt.

Es ist Aufgabe der vorliegenden Erfindung, einen Greifer bereitzustellen, bei welchem eine fehlerhafte Bewegung einer Arzneimittelpackung auf den Ablagetisch eines Greifers auch bei gebogener Stirnseite des Ablagetisches detektiert werden kann. Es ist ferner Aufgabe der vorliegenden Erfindung, ein Verfahren zum Verifizieren eines Bewegens von Arzneimittelpackungen auf den Ablagetisch bereitzustellen.

Gelöst wird diese Aufgabe durch einen Greifer für eine Kommissioniervorrichtung mit horizontalen Lagerflächen zur Lagerung von Arzneimittelpackungen gemäß Patentanspruch 1. Der erfindungsgemäße Greifer umfasst eine Steuereinrichtung, einen sich in einer ersten horizontalen Richtung (X-Richtung) und einer zweiten horizontalen Richtung (Y-Richtung), orthogonal zur ersten horizontalen Richtung erstreckenden Ablagetisch mit einem Endabschnitt mit einer sich in der zweiten horizontalen Richtung bogenförmig erstreckenden Stirnseite, wobei der Endabschnitt die Ein- und Auslagerungsstirnseite bildet und wobei der Ablagetisch mit dem Endabschnitt eine obere Auflagefläche definieren. Die bogenförmige Ausgestaltung der Stirnseite ermöglicht es, dass auch (in der zweiten horizontalen Richtung) breite Greifer, ohne selbst in der zweiten horizontalen Richtung verfahrbar zu sein, so vor einen Lagerplatz gedreht werden können, dass kein zu breiter Spalt zwischen Stirnseite des Greifers und Stirnseite des Lagerplatzes verbleibt.

Über dem Ablagetisch ist eine in der ersten horizontalen Richtung bewegbare Transporteinrichtung zum Bewegen von Arzneimittelpackungen von einer horizontalen Lagerfläche auf den Ablagetisch angeordnet. Zum Ergreifen einer Arzneimittelpackung wird die Transporteinrichtung zunächst in der ersten horizontalen Richtung hin zu einem Ablageort einer Arzneimittelpackung bewegt. Sobald die Transporteinrichtung entsprechend positioniert ist, wird eine Arzneimittelpackung ergriffen und die Transporteinrichtung wieder in der ersten horizontalen Richtung hin zu dem Ablagetisch bewegt, wodurch die Arzneimittelpackung auf den Ablagetisch gezogen wird. Bei dieser Ziehbewegung wird die Arzneimittelpackung über den Endabschnitt mit bogenförmiger Stirnseite bewegt. Wie genau die Arzneimittelpackung ergriffen wird, ist abhängig von der genauen Ausgestaltung der Transporteinrichtung. Unter den Begriff der Transporteinrichtung sollen erfindungsgemäß alle Einrichtungen fallen, mit denen sich eine Arzneimittelpackung von der Lagerfläche auf den Ablagetisch bewegen lässt. Beispielsweise ist es denkbar, dass die Transporteinrichtung als ein Saugarm ausgebildet ist bzw. einen solchen umfasst, mittels welchem eine Arzneimittelpackung auf den Ablagetisch gezogen wird.

Bei dem erfindungsgemäßen Greifer sind in dem Endabschnitt unterhalb der Auflagefläche zumindest drei mit der Steuereinrichtung gekoppelte Sensoren zum Bestimmen des Vorhandenseins einer Arzneimittelpackung angeordnet, wobei die Sensoren in der zweiten horizontalen Richtung beabstandet voneinander angeordnet sind und wobei in der zweiten horizontalen Richtung äußere Sensoren von zumindest einem in der zweiten horizontalen Richtung weiter innen angeordneten Sensor in der ersten horizontalen Richtung beabstandet angeordnet sind, so dass die Anordnung der Sensoren an der sich bogenförmig erstreckenden Stirnseite orientiert ist.

Dabei ist es nicht zwingend notwendig, dass die Sensoren exakt an der Bogenform der Stirnseite ausgerichtet sind. Es ist auch denkbar, dass der Versatz in der ersten horizontalen Richtung (X-Richtung) beispielsweise linear ist. Obgleich eine Ausrichtung an der Bogenform nicht zwingend notwendig ist, ist diese jedoch bevorzugt. Bei einer bevorzugten Ausführungsform ist es daher vorgesehen, dass die Sensoren derart in der ersten horizontalen Richtung (X-Richtung) voneinander beabstandet sind, dass die Sensoren einen im Wesentlichen gleichen Abstand zur bogenförmigen Stirnseite aufweisen, d. h. an der Bogenform der Stirnseite ausgerichtet sind. Mit der Formulierung "im Wesentlichen gleichen Abstand" sollen auch solche Anordnungen umfasst sein, bei denen der Abstand zu der Stirnseite fertigungsbedingt leicht variiert. Eine entsprechende Anordnung der Sensoren ermöglicht eine sehr genaue Detektion im Hinblick auf eine fehlerhafte Bewegung einer Arzneimittelpackung. Eine solche fehlerhafte Bewegung kann auch dann detektiert werden, wenn die Arzneimittelpackung beispielsweise nur in einem äußeren Bereich des Endabschnitts geringfügig aufliegt.

Bedingt durch die Anordnung des Sensors in dem Endabschnitt und unterhalb der Auflagefläche kann jeder Sensor verwendet werden, der das Aufliegen eines Gegenstandes detektieren kann. Der Sensor kann beispielsweise nach dem Prinzip eines Lichttasters, eines Lichtsensors oder eines taktilen Sensors arbeiten, wobei die genaue Ausgestaltung des Sensors für die Erfindung nicht wesentlich ist, solange sichergestellt ist, dass dieser bei erfindungsgemäßer Anordnung das Vorhandensein eines Stückgutes in dem Endbereich detektieren kann.

Mit dem erfindungsgemäßen Greifer ist es möglich, auch solche Fehlbewegungen bzw. Auslagerungen von Arzneimittelpackungen zu detektieren, bei denen die Arzneimittelpackung derart in dem Übergangsbereich Ablageort/Ablagetisch hängen bleibt, dass sie lediglich in dem Endabschnitt des Ablagetisches aufliegt. Würde man bei einem solchen Fall eine Lichtschranke verwenden, die lediglich in dem parallelen Abschnitt des Ablagetisches angeordnet sein kann, würde eine solche Fehlauslagerung nicht detektiert werden. Die erfindungsgemäße Verwendung und Anordnung zumindest eines Sensors unterhalb der Auflagefläche ermöglicht eine solche Detektion aber. Die Verwendung eines vorgenannten Sensors hat darüber hinaus den Vorteil, dass dieser kostengünstiger als eine Lichtschranke ist.

Sofern in dieser Anmeldung von einer Arzneimittelpackung die Rede ist, sollen dort, wo es technisch sinnvoll ist, auch mehrere Arzneimittelpackungen umfasst sein. So ist es bei entsprechender Anordnung der Arzneimittelpackungen möglich, auch mehrere Arzneimittelpackungen von einem Ablageort auf den Ablagetisch zu bewegen.

Wie oben dargelegt, kann die Transporteinrichtung beispielsweise als ein Saugarm ausgebildet sein bzw. einen solchen umfassen. Zwar ist eine solche Ausgestaltung baulich recht simpel, eine Bewegung von mehreren Arzneimittelpackungen gleichzeitig von einer Lagerfläche auf die Ablagefläche aber nicht und eine Bewegung von sehr schweren Arzneimittelpackungen nur schwierig möglich. Bei einer bevorzugten Ausführungsform des erfindungsgemäßen Sauggreifers ist es daher bevorzugt, dass die Transporteinrichtung zwei über dem Ablagetisch angeordnete langgestreckte, sich in der ersten horizontalen Richtung (X-Richtung) erstreckende Klemmbacken mit einander zugewandten Klemmflächen umfasst, wobei zumindest eine der Klemmbacken zusätzlich zumindest abschnittsweise in der zweiten horizontalen Richtung bewegbar ist. Bei dieser Ausgestaltung der Transporteinrichtung können mehrere Arzneimittelpackungen zeitgleich bewegt werden. Ferner können bei Aufbringen einer entsprechenden Klemmkraft auch schwerere Arzneimittelpackungen bewegt werden. Die Verwendung von Klemmbacken hat ferner den Vorteil, dass diese auch bei einer Bewegung von Arzneimittelpackungen von dem Ablagetisch hin zu einer Lagerfläche oder einem Abgabeort die Arzneimittelpackungen führend unterstützen können. Ferner kann ein solcher Greifer genutzt werden, Arzneimittelpackungen auf einer Lagerfläche entlang der zweiten horizontalen Richtung zu verschieben.

Die Sensoren dienen, wie dies oben dargelegt ist, der Detektion, ob eine Arzneimittelpackung beim Bewegen auf den Ablagetisch in dem Endabschnitt des Ablagetisches liegengeblieben bzw. hängengeblieben ist. Darüber hinaus ist es aber auch möglich, die Sensoren für eine Plausibilitätsprüfung im Hinblick auf die ausgelagerte Arzneimittelpackung zu verwenden, und zwar indem man mit den Sensoren die ungefähre Breite der Arzneimittelpackung ermittelt, die über den Endabschnitt auf den Ablagetisch gezogen wird. Damit dies möglich ist, ist es bei einer bevorzugten Ausführungsform des erfindungsgemäßen Greifers vorgesehen, dass die mehreren Sensoren spiegelsymmetrisch in Bezug auf eine sich in der ersten horizontalen Richtung (X-Richtung) erstreckende Mittelachse des Ablagetisches angeordnet sind. Anhand der Kenntnis der spiegelsymmetrischen Anordnung der Sensoren ist es leicht möglich, auf die ungefähre Breite der auf den Ablagetisch bewegten Arzneimittelpackung zu schließen. In Abhängigkeit von der Anzahl der Sensoren kann die "Auflösung" bei der Plausibilitätsprüfung erhöht werden.

Wie bereits dargelegt, ist der Endabschnitt bei dem erfindungsgemäßen Greifer bogenförmig ausgebildet. Um zu gewährleisten, dass der Spalt zwischen der Stirnseite und dem Ablageort einer Arzneimittelpackung besonders klein ausfällt, ist es bei einer bevorzugten Ausführungsform vorgesehen, dass die bogenförmige Stirnseite des Endabschnittes kreisbogenförmig ausgebildet ist, wobei der Mittelpunkt des entsprechenden Kreises in einer vertikalen Drehachse des Ablagetisches liegt.

Um bei Ausfall eines Sensors oder mehrerer Sensoren eine lange Stillstandszeit des Greifers zu vermeiden, ist es bei einer bevorzugten Ausführungsform vorgesehen, dass der zumindest einen Sensor umfassende Endabschnitt als von dem Ablagetisch lösbare Sensorbaugruppe ausgebildet ist. Eine entsprechende Ausbildung als Sensorbaugruppe ermöglicht einen raschen Ersatz, ggf. auch durch einen "normalen" Bediener.

Wesentlich bei dem erfindungsgemäßen Greifer ist, dass die Klemmbacken in der ersten horizontalen Richtung (X-Richtung) bewegbar sind, wobei dies bedeutet, dass die Klemmbacken von dem Ablagetisch hin zu einem Ablageort und wieder zurück bewegbar sind, wobei die die erste horizontale Richtung (X-Richtung) regelmäßig der Längsachse des Ablagetisches entspricht. Um das Klemmen bzw. Greifen einer Arzneimittelpackung zu gewährleisten, ist es ferner notwendig, dass zumindest eine der Klemmbacken in der zweiten horizontalen Richtung (Y-Richtung) verfahrbar ist. Um das Greifen einer Arzneimittelpackung besonders effektiv und wirksam zu gestalten, ist es von Vorteil, dass beide Klemmbacken in der zweiten horizontalen Richtung (Y-Richtung) verfahrbar sind und zumindest eine auch schwenkbar ausgebildet ist. Um dies zu erreichen, ist es bei einer bevorzugten Ausführungsform des Greifers vorgesehen, dass dieser eine Klemmbackenführungsanordnung zum Durchführen der vorgenannten Bewegungen aufweist. Diese Klemmbackenführungsanordnung umfasst eine Rahmenstruktur, zumindest eine erste und eine zweite Führung, die sich parallel und in der ersten horizontalen Richtung beabstandet voneinander in der zweiten horizontalen Richtung erstrecken, und zumindest vier mit den Führungen gekoppelte und in der zweiten horizontalen Richtung angetriebene Klemmbackenschlitten, wobei jeweils zwei erste Klemmbackenschlitten der ersten Führung und zwei zweite Klemmbackenschlitten der zweiten Führung zugeordnet sind und wobei jeweils zumindest zwei in der ersten horizontalen Richtung beabstandete Klemmbackenschlitten mit einer Klemmbacke gekoppelt sind. Mit der Klemmbackenführungsanordnung ist darüber hinaus eine Antriebseinheit gekoppelt, mit der die Klemmbackenführungsanordnung in der ersten horizontalen Richtung angetrieben ist. Die Verwendung der Kombination der Führungen mit Klemmbackenschlitten ermöglicht es, die Klemmbacken gleichmäßig aufeinander zu oder voneinander weg zu bewegen und gleichzeitig eine der Klemmbacken zu verschwenken, wenn die Klemmbackenschlitten an der ersten und zweiten Führung nicht simultan zueinander verfahren werden. Eine entsprechende Ausgestaltung des Bewegungsmechanismus der Klemmbacken hat darüber hinaus den Vorteil, dass aufgrund der Führung der Klemmbacken eine erhebliche Klemmkraft auf zu bewegende Arzneimittelpackungen aufgebracht werden kann.

Die oben genannte Aufgabe wird ferner gelöst durch ein Verfahren zum Verifizieren eines Bewegens von Arzneimittelpackungen auf einen Ablagetisch eines Greifers für eine Kommissioniervorrichtung gemäß Patentanspruch 8. Bei dem erfindungsgemäßen Verfahren wird in einem Schritt a) die Transporteinrichtung in der ersten horizontalen Richtung (X-Richtung) hin zu einem Ablageort von zumindest einer Arzneimittelpackung bewegt und die zumindest eine Arzneimittelpackung gegriffen. Bei dem Ablageort kann es sich beispielsweise um eine Regalfläche handeln. Alternativ kann der Ablageort auch durch beispielsweise ein Förderband gebildet werden, von welchem die Arzneimittelpackung gegriffen wird, um diese zu einer Regalfläche zu bewegen. Nach dem Ergreifen der Arzneimittelpackung wird die Transporteinrichtung in Schritt b) von dem Ablageort in die erste horizontale Richtung (X-Richtung) hin zu dem Ablagetisch bewegt, wobei die zumindest eine Arzneimittelpackung über die bogenförmige Stirnseite des Endabschnittes auf die Auflagefläche des Ablagetisches bewegt wird. Nach dem Bewegen der Transporteinrichtung in die erste horizontale Richtung (X-Richtung) wird in einem Schritt c) mittels der Sensoren in dem Endabschnitt geprüft, ob (zumindest) eine Arzneimittelpackung in dem Detektionsbereich des Sensors vorhanden ist. Wenn dies der Fall ist, bedeutet dies, dass zumindest ein Abschnitt einer Arzneimittelpackung in dem Endabschnitt des Ablagetisches aufliegt, was eine fehlerhafte Bewegung einer Arzneimittelpackung von einem Ablageort auf den Ablagetisch anzeigt. Sofern die Prüfung positiv ausfällt, wird in einem Schritt d) ein Signal bereitgestellt, welches einen ersten fehlerhaften Entnahmeversuch eines Stückgutes von einem Ablageort auf den Ablagetisch kennzeichnet.

Wenn ein Signal bereitgestellt wird, welches einen ersten fehlerhaften Entnahmeversuch kennzeichnet, kann dies zur Folge haben, dass die Kommissioniervorrichtung solange stillgelegt wird, bis der Fehler durch einen Bediener behoben ist. Bei einer bevorzugten Ausführungsform des Verfahrens zum Verifizieren eines Bewegens von Arzneimittelpackungen auf einen Ablagetisch eines Greifers, bei welchem die Transporteinrichtung zwei über dem Ablagetisch angeordnete langgestreckte, sich in die erste horizontale Richtung (X-Richtung) erstreckende Klemmbacken mit einander zugewandten Klemmflächen umfasst, wird die Anlage jedoch nicht vollständig lahmgelegt, sondern die Klemmbacken werden in der zweiten horizontalen Richtung (Y-Richtung) geöffnet und erneut in die erste horizontale Richtung (X-Richtung) hin zu dem Ablageort bewegt, und anschließend wird die in dem Endabschnitt angeordnete Arzneimittelpackung mit den Klemmbacken ergriffen. Da anhand der Prüfung bekannt ist, dass (und wo) die Arzneimittelpackung zumindest abschnittsweise in dem Endabschnitt des Ablagetisches angeordnet ist, kann aufgrund der zu der Packung vorliegenden Informationen abgeschätzt werden, wie weit die Bewegung in die erste horizontale Richtung (X-Richtung) erfolgen muss.

Nachdem die Arzneimittelpackung mit den Klemmbacken ergriffen wurde (oder dies zumindest versucht wurde), werden die oben genannten Verfahrensschritte b) und c) erneut durchgeführt, d. h. die Packung wird auf den Ablagetisch zurückgeführt und eine Prüfung des Endabschnittes durchgeführt. Sollte auch die zweite Prüfung des Endschnittes positiv ausfallen, d. h. sollte festgestellt werden, dass wieder eine Arzneimittelpackung auf dem Endabschnitt aufliegt, wird ein Signal bereitgestellt, welches einen zweiten fehlerhaften Entnahmeversuch kennzeichnet. In Reaktion darauf kann die Anlage nun stillgelegt werden, oder es kann ggf. auch ein dritter Entnahmeversuch durchgeführt werden.

Bei einer bevorzugten Ausführungsform des erfindungsgemäßen Verfahrens wird bei dem Bewegen der zumindest einen Arzneimittelpackung hin zu dem Ablagetisch mittels der Sensoren die Breite einer Arzneimittelpackung ermittelt, die ermittelte Breite mit einer der Steuereinrichtung bekannten Soll-Breite verglichen und, bei Überschreiten einer Grenzabweichung zwischen ermittelter Breite und Soll-Breite einer Arzneimittelpackung, ein entsprechendes Signal bereitgestellt. Bei dieser bevorzugten Ausführungsform findet also eine weitere Verifikation der bewegten Arzneimittelpackung statt. Zwar ist es relativ unwahrscheinlich, dass bei einem Ablageplatz nicht die Arzneimittelpackung angeordnet ist, die die Steuereinrichtung der Kommissioniervorrichtung erwartet, jedoch kann dies dann der Fall sein, wenn beispielsweise bei einer Fehlerkorrektur durch einen Bediener die Arzneimittelpackungen in der Kommissioniervorrichtung verschoben wurden. Die erfindungsgemäße Ausführungsform erhöht also noch einmal die Sicherheit dahingehend, dass die richtige Arzneimittelpackung ausgelagert wird.

Die Reaktion auf das bereitgestellte Signal, welches auf eine falsche Arzneimittelpackung hinweist, kann sein, dass die Kommissioniervorrichtung aufgrund der unerwarteten Arzneimittelpackung angehalten wird. Alternativ kann bei einer bevorzugten Ausführungsform vorgesehen sein, dass nach Bereitstellen eines auf ein Überschreiten einer Grenzabweichung hinweisenden Signals der Greifer hin zu einer Entladestation bewegt wird und die auf dem Ablagetisch aufliegenden Arzneimittelpackungen der Entladestation übergeben werden. Dadurch wird vermieden, dass bei einer festgestellten Fehleinlagerung ein Benutzer die Kommissioniervorrichtung betreten muss, was einen Stillstand der Kommissioniervorrichtung vermeidet. Die so ausgelagerten Arzneimittelpackungen können erneut eingelagert werden und das an sich auszulagernde Arzneimittel kann erneut angefordert werden.

Die Erfindung betrifft ferner eine Verwendung einer Sensorbaugruppe mit einer sich in einer zweiten horizontalen Richtung, orthogonal zu einer ersten horizontalen Richtung erstreckenden bogenförmig erstreckenden Stirnseite und zumindest drei von unter einer Oberfläche der Sensorbaugruppe angeordneten Sensoren zum Bestimmen des Vorhandenseins einer Arzneimittelpackung, wobei die Sensoren in der zweiten horizontalen Richtung beabstandet voneinander angeordnet sind und wobei in der zweiten horizontalen Richtung äußere Sensoren von zumindest einem in der zweiten horizontalen Richtung weiter innen angeordneten Sensor in der ersten horizontalen Richtung beabstandet angeordnet sind, so dass die Anordnung der Sensoren an der sich bogenförmig erstreckenden Stirnseite orientiert ist, und einer Schnittstelle zum Anschließen der Sensorbaugruppe an eine Steuereinrichtung zum Verifizieren eines Bewegens von Arzneimittelpackungen auf einen Auflagetisch eines Greifers einer Kommissioniervorrichtung für Arzneimittel.

Im Nachfolgenden werden bevorzugte Ausführungsformen des erfindungsgemäßen Greifers sowie des erfindungsgemäßen Verfahrens unter Bezugnahme auf die Zeichnung näher beschrieben, in welcher
Figuren 1a und 1b Schrägansichten einer ersten Ausführungsform des erfindungsgemäßen Greifers zeigen,
Figuren 2a, 2b Detailansichten der ersten Ausführungsform im Bereich des Endabschnittes des Ablagetisches zeigen,
Figuren 3a, 3b die Detailansichten der Figuren 2a und 2b ohne den Ablagetisch selbst zeigen,
Figuren 4a, 4b eine Klemmbackenführungsanordnung einer zweiten Ausführungsform des erfindungsgemäßen Greifers zeigen,
Figuren 5a und 5b Detailansichten dieser Klemmbackenführungsanordnung zeigen,
Figur 6 eine Schrägansicht der Klemmbackenführungsanordnung bei Parallelstellung der Klemmbacken zeigt,
Figuren 7a - 7h verschiedene Stadien einer bevorzugten Ausführungsform des erfindungsgemäßen Verfahrens zeigen, und
Figur 8 ein Ablaufdiagramm der bevorzugten Ausführungsform des erfindungsgemäßen Verfahrens zeigt.

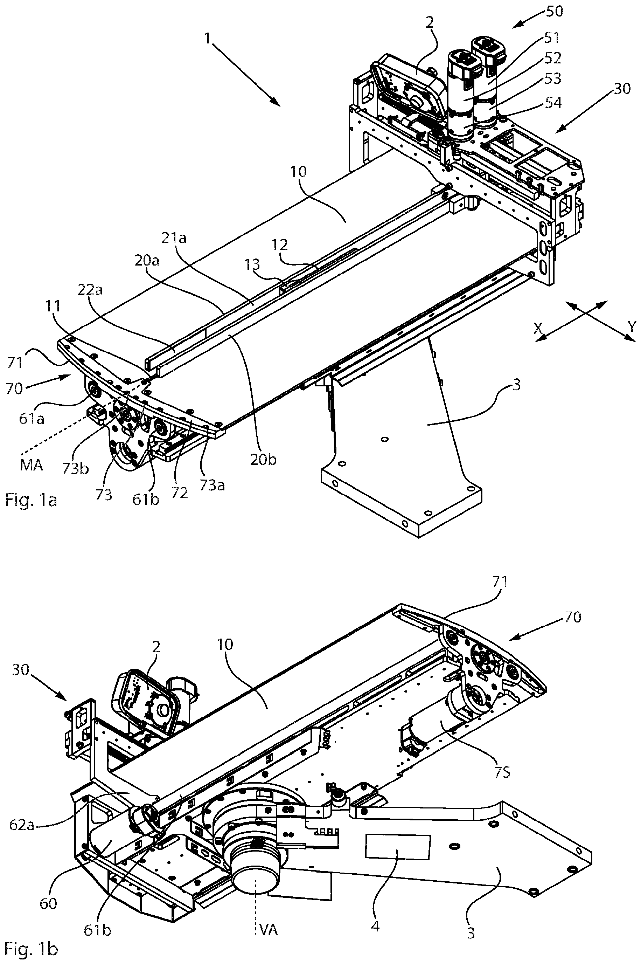

Figuren 1a und 1b zeigen zwei Schrägansichten einer ersten bevorzugten Ausführungsform des erfindungsgemäßen Greifers 1, wobei Figur 1a eine Schrägansicht von oben und Figur 1b eine Schrägansicht von unten zeigt. Der erfindungsgemäße Greifer 1 ist Teil eines (nicht dargestellten) Bediengerätes für eine Kommissioniervorrichtung und umfasst einen Ablagetisch 10 sowie eine Transporteinrichtung, die bei dieser Ausführungsform zwei Klemmbacken 20a, 20b mit gegenüberliegenden Klemmflächen 21a, 21b umfasst. Bei ihren freien Enden weisen die Klemmbacken 20a, 20b einen Abschnitt 22a, 22b auf, der mit einem rutschhemmenden Material beschichtet ist.

Bei den freien Enden der Klemmbacken weist der Ablagetisch 10 einen Endabschnitt 70 auf, der bei dieser Ausführungsform als Sensorbaugruppe 72 mit einer Mehrzahl von Sensoren 73, 73a, 73b ausgebildet ist, die unterhalb der Oberfläche der Sensorbaugruppe angeordnet sind und das Vorhandensein eines Gegenstandes in ihrem Detektionsbereich erkennen können. Die Sensoren können erkennen, wenn eine Arzneimittelpackung (zumindest abschnittsweise) in dem Endabschnitt aufliegt.

Bei den Sensoren 73a handelt es sich um die äußeren Sensoren, bei dem Sensor 73b um den inneren Sensor, wobei zwischen diesen mehrere weitere Sensoren 73 angeordnet sind. Ob ein oder zwei inneren Sensoren 73b vorhanden sind, hängt von der genauen Ausgestaltung einer Ausführungsform ab; das gleiche gilt für die Anzahl der weiteren Sensoren zwischen den äußeren und inneren Sensoren (wobei diese Zahl auch null sein kann).

Die Sensoren sind an der bogenförmig ausgebildeten Stirnseite 71 des Endabschnitts orientiert angeordnet, wobei kleine (z. B. fertigungsbedingte) Abweichungen im Hinblick auf den genauen Abstand zu der Stirnseite als solcher unerheblich sind. Wie man erkennt, sind die Sensoren in der zweiten horizontalen Richtung (Y-Richtung) voneinander beabstandet angeordnet, und die äußeren Sensoren 73a sind von dem inneren Sensor 73b auch in die erste horizontale Richtung (X-Richtung) beabstandet angeordnet. Wie genau die in der zweiten horizontalen Richtung (Y-Richtung) verteilten Sensoren in die erste horizontale Richtung (X-Richtung) voneinander beabstandet sind, ist abhängig von der genauen Form der bogenförmigen Stirnseite und der Anzahl der Sensoren. So kann es vorkommen, dass z. B. zwei innere Sensoren 73a in der ersten horizontalen Richtung (X-Richtung) nicht voneinander beabstandet sind; die äußeren Sensoren 73a sind aber stets zu dem zumindest einen inneren Sensor 73b in der ersten horizontalen Richtung (X-Richtung) beabstandet angeordnet.

Der Endabschnitt bildet die Ein- und Auslagerungsstirnseite des Ablagetisches 10, und gemeinsam mit dem Ablagetisch bildet der Endabschnitt eine Auflagefläche, auf welcher Arzneimittelpackungen aufliegen bzw. bewegt werden. Die Stirnseite 71 des Endabschnitts ist bogenförmig ausgebildet.

Dies ist bei entsprechend breiten Ablagetischen dann notwendig, wenn diese zum Heranführen an einen Ablageort lediglich geschwenkt und nicht zusätzlich in der ersten horizontalen Richtung (X-Richtung) hin zu dem Ablageort bewegt werden sollen und ein Spalt zwischen Stirnseite und Ablageort flächig möglichst klein gehalten werden soll. Bei der gezeigten Ausführungsform ist der Endabschnitt als lösbare Sensorbaugruppe ausgebildet, die über nicht dargestellte Verbindungsmittel mit einer (in Fig 1b dargestellten) Steuereinrichtung gekoppelt ist.

Der Ablagetisch umfasst mittig eine langgestreckte Öffnung 11, die sich in Ein- und Auslagerungsrichtung, d. h. in der ersten horizontalen Richtung (X-Richtung) erstreckt. In der Öffnung 11 ist ein Schiebeelement 12 mit einem verbreiterten Schiebekopf 13 angeordnet. Das Schiebeelement 12 kann in der langgestreckten Öffnung 11 in Ein- und Auslagerungsrichtung bzw. der ersten horizontalen Richtung bewegt werden.

Gegenüber des Endabschnitts ist eine Klemmbackenführungsanordnung 30 angeordnet, mit welcher die Klemmbacken 20a, 20b verbunden sind und welche eine Mechanik zum Verfahren und Verschwenken der Klemmbacken umfasst. Im oberen Abschnitt umfasst die Klemmbackenführungsanordnung 30 eine Antriebseinheit 50 mit zwei Antrieben 51, 52 sowie zugeordneten Getrieben 53, 54. Über diese beiden Antriebe werden bei der gezeigten Ausführungsform die Klemmbacken verfahren und geschwenkt, wie dies unter Bezugnahme auf nachfolgende Figuren detaillierter beschrieben wird. Die Klemmbackenführungsanordnung umfasst ferner eine optische Erfassungseinrichtung 2, mit welcher bei dem Ein- und Auslagerungsvorgang verschiedene Aspekte überwacht werden können.

Die Klemmbackenführungsanordnung 30 sowie sämtliche ihrer elektronischen Bauteile sind mit einer Steuereinrichtung 4 verbunden, die bei der gezeigten Ausführungsform unterhalb eines Befestigungsarmes 3 angeordnet ist. Der Befestigungsarm 3 selbst ist an dem Ablagetisch bzw. an einem Unterbau des Ablagetisches über ein Drehgelenk befestigt.

Zur Ein- und Auslagerung von Arzneimittelpackungen muss die Klemmbackenführungsanordnung 30 in der ersten horizontalen Richtung (X-Richtung) bzw. der Ein- und Auslagerungsrichtung bewegt werden. Dazu ist bei der gezeigten Ausführungsform unterhalb des Ablagetisches ein Antrieb 60 angeordnet, mittels welchem die Klemmbackenführungsanordnung 30 bewegt wird, wie dies unter Bezugnahme auf nachfolgende Figuren detaillierter beschrieben wird. Unterhalb des Ablagetisches ist ferner ein weiterer Antrieb 7 angeordnet, mit welchem das Schiebeelement 12 in der ersten horizontalen Richtung in der länglichen Öffnung 11 bewegbar ist.

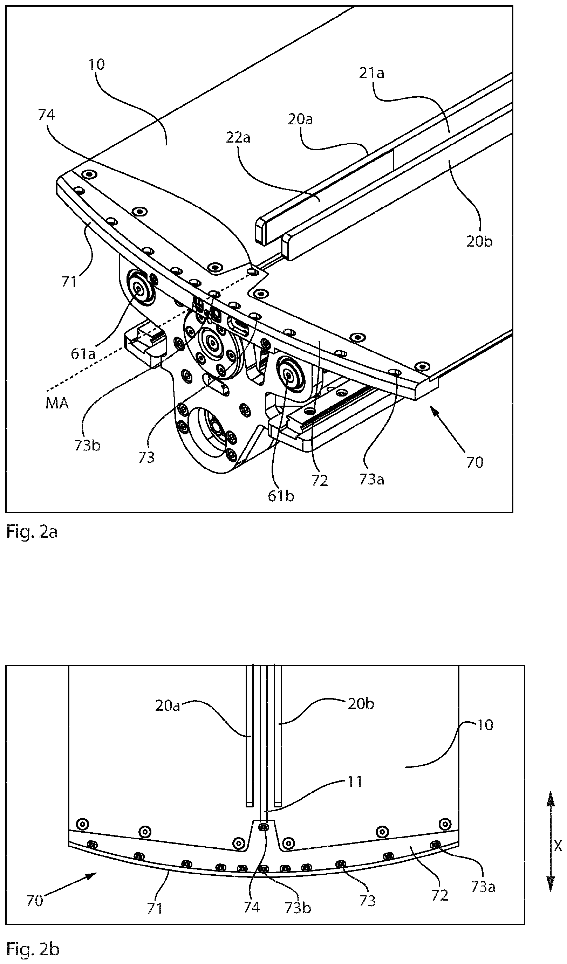

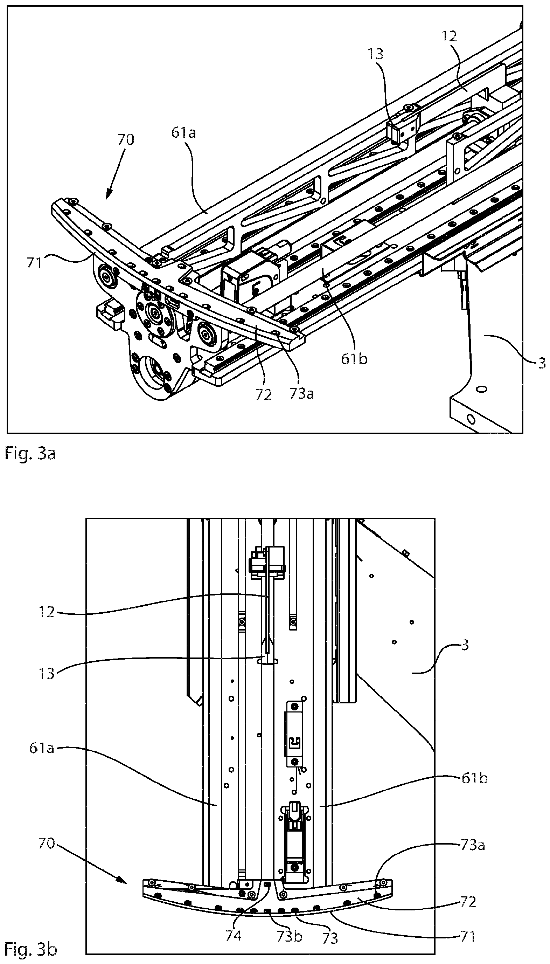

Figuren 2a, 2b und 3a, 3b zeigen Detailansichten der ersten Ausführungsform im Bereich des Endabschnittes des Ablagetisches 10, wobei bei den Figuren 3a und 3b der Ablagetisch zur Verdeutlichung des unteren Teils des Greifers fortgelassen ist. In Figuren 2a und 2b ist die Anordnung der Sensoren 73, 73a, 73b zu erkennen, die bei der gezeigten Ausführungsform spiegelsymmetrisch zu der Mittel- bzw. Längsachse MA des Ablagetisches 10 des Greifers angeordnet sind. Bei der gezeigten Ausführungsform umfasst die Sensorbaugruppe neben den Sensoren 73, 73a, 73b einen Sensor 74, der entsprechend den anderen Sensoren ausgebildet ist und zur Ermittlung der Länge (in X-Richtung) des bzw. der auf den Ablagetisch bewegten Arzneimittelpackung/-en dienen kann. Dazu wird die Arzneimittelpackung beim Bewegen auf den Ablagetisch ganz an den Schiebekopf 13 bewegt, und zwar indem die Klemmbacken 20a, 20b vollständig zurückbewegt werden. Nach Anliegen an dem Schiebekopf wird die Arzneimittelpackung so lange hin zum Endabschnitt bewegt, bis der Sensor 74 aktiviert wird. Anhand der Bewegungsstrecke kann die Länge in der ersten horizontalen Richtung (X-Richtung) ermittelt und mit der bekannten Länge verglichen werden.

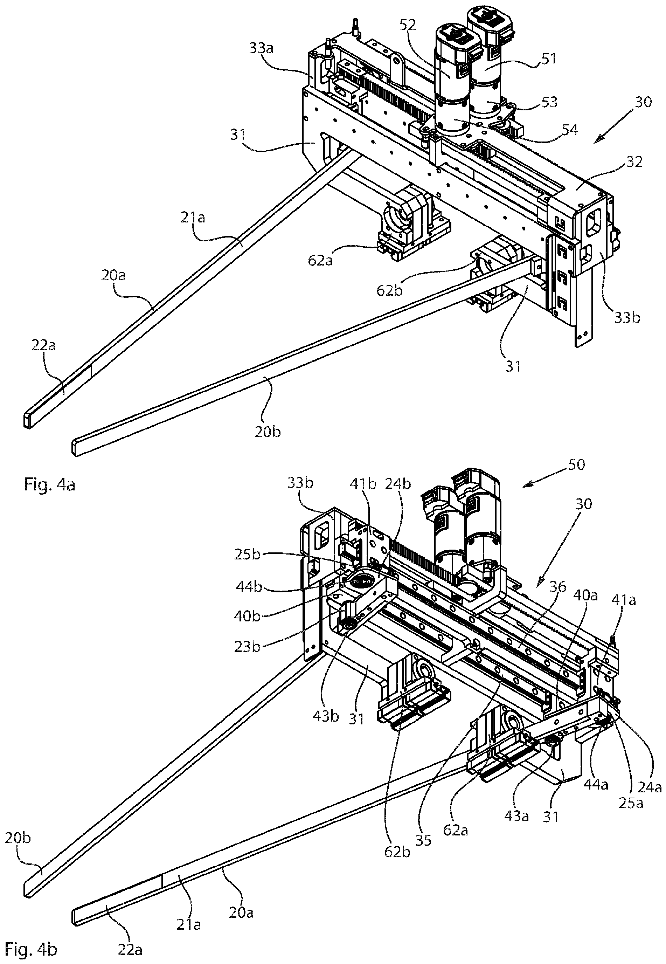

Figuren 4a und 4b zeigen Schrägansichten einer Klemmbackenführungsanordnung 30 einer zweiten Ausführungsform, bei welcher beide Klemmbacken zum Greifen geschwenkt sind. Die Klemmbackenführungsanordnung 30 umfasst eine geringfügig anders aufgebaute Rahmenstruktur 31, 32, 33a, 33b, wobei das vordere Bauteil 31 die Klemmbacken (und den nicht dargestellten Ablagetisch) umgreift. Bei den unteren Enden des Bauteiles 31 sind bewegliche Teile 62a, 62b (die "Läufer") eines Linearantriebes befestigt, mit welchen die Klemmbackenführungsanordnung 30 in der ersten horizontalen Richtung bewegt werden kann. Die Bauteile werden als "beweglich" bezeichnet, da sie sich zusammen mit der Klemmbackenführungsanordnung entlang entsprechender feststehender Teile (die zum Bewegen der beweglichen Teile gedreht werden) in der ersten horizontalen Richtung bewegen. Die feststehenden Teile 61a, 61b (siehe Figuren 2a, 2b und 3a, 3b) selbst können sich zum Bewegen der beweglichen Teile bewegen, beispielweise indem sie sich drehen, wobei bei dieser Drehbewegung die beweglichen Teile entlang der Längsachse der feststehenden Teile bewegt werden. Die feststehenden Teile sind also nur in Bezug auf ihre Position innerhalb des Bediengerätes selbst feststehend. Bei einer alternativen Ausführungsform ist es beispielsweise denkbar, dass die feststehenden Teile als Zahnriemen ausgebildet sind, die zwischen den Längsenden des Bediengerätes ausgebildet sind und mit entsprechenden Umlenkrollen zum Bewegen der beweglichen Teile zusammenwirken.

Wie es Figur 4b zu entnehmen ist, erstrecken sich zwischen den seitlichen Rahmenstrukturbauteilen 33a, 33b in einer zweiten horizontalen Richtung (Y-Richtung) parallel zueinander und in der ersten horizontalen Richtung (X-Richtung) beabstandet voneinander zwei Führungen 35, 36, eine erste Führung 35 und eine zweite Führung 36, wobei die erste Führung den freien Enden der Klemmbacken zugewandt ist. An jeder der Führungen 35, 36 sind zwei Klemmbackenschlitten 40a, 40b; 41a, 41b angeordnet; zwei erste Klemmbackenschlitten 40a, 40b an der ersten Führung 35, zwei zweite Klemmbackenschlitten 41a, 41b an der zweiten Führung 36. Bei der dargestellten Ausführungsform des erfindungsgemäßen Bediengerätes umgreift ein Abschnitt der Klemmbackenschlitten einen Vorsprung der Führungen 35, 36, so dass die Klemmbackenschlitten auf diesem Vorsprung teilweise aufliegen.

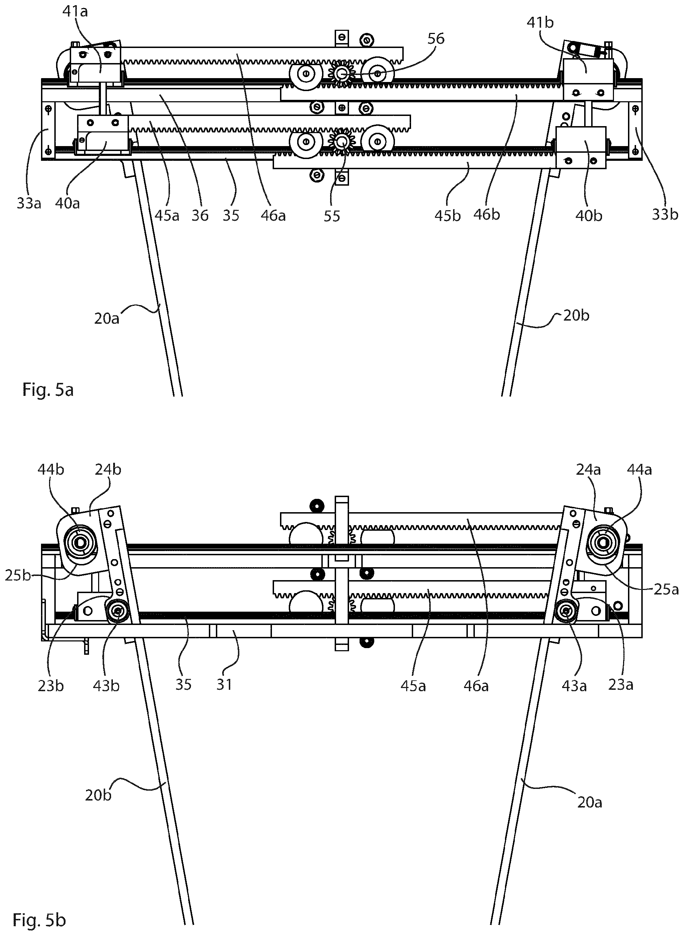

Figuren 5a und 5b zeigen Detailansichten der Klemmbackenanordnung der zweiten Ausführungsform. Man erkennt anhand dieser Figuren, dass Klemmbackenschlitten 40a, 40b; 41a, 41b mit Antriebselementen 45a, 45b; 46a, 46b verbunden sind, die bei der gezeigten Ausführungsform als Zahnstangen ausgebildet sind. Die der ersten Führung 35 bzw. den entsprechenden ersten Klemmbackenschlitten 40a, 40b zugeordneten Antriebselemente 45a, 45b sowie die entsprechenden der zweiten Führung 36 zugeordneten Antriebselemente 46a, 46b sind bezogen auf die Zahnelemente der Zahnstangen derart ausgerichtet, dass sich die Zahnelemente gegenüberliegen und bei ihren freien Enden einen Überlappungsbereich bilden. Mittig in dem Überlappungsbereich der Antriebselemente bzw. Zahnstangen ist jeweils ein Antriebszahnrad 55, 56 angeordnet, welches über ein (in den Figuren 5a und 5b nicht dargestelltes) Getriebe 53, 54 mit einem Antrieb 51, 52 gekoppelt ist. Der Abstand zwischen den Klemmbackenschlitten 40a, 40b; 41a, 41b einer Führung und dem entsprechenden Antriebszahnrad ist identisch, ein Antriebszahnrad ist also genau mittig zwischen zwei Klemmbackenschlitten angeordnet, so dass eine Bewegung des Antriebszahnrades synchrone Bewegungen der Klemmbackenschlitten bewirkt. Bei einer Drehung des Antriebszahnrades werden die Klemmbackenschlitten also synchron aufeinander zu oder voneinander weg bewegt, wobei entsprechendes für die den beiden Führungen 35, 36 zugeordneten Klemmbackenschlitten gilt.

Die Klemmbackenschlitten der ersten Führung können also simultan oder getrennt hinsichtlich der Klemmbackenschlitten der zweiten Führung bewegt werden, so dass eine große Flexibilität hinsichtlich der Bewegung der Klemmbackenschlitten besteht. Die Klemmbackenschlitten der ersten bzw. zweiten Führung können synchron bewegt werden, oder es können nur die der ersten oder der zweiten Führung zugeordneten Klemmbackenschlitten bewegt werden. Auf diese Weise ist es möglich, die an den Klemmbackenschlitten befestigten Klemmbacken parallel oder bereits geschwenkt simultan ohne Winkelverstellung zu verfahren (indem die Klemmbackenschlitten beider Führungen simultan bewegt werden), oder, wenn lediglich die Klemmbackenschlitten einer Führung bewegt werden, die Klemmbacken zu schwenken.

Wie bereits ausgeführt, sind die Klemmbacken 20a, 20b mit der Klemmbackenführungsanordnung 30 gekoppelt. Diese Kopplung ist bei den Figuren 4b und 5b zu erkennen. Bei der gezeigten Ausführungsform sind die Klemmbacken 20a, 20b jeweils über ein Drehgelenk 23a, 43a; 23b, 43b mit den Klemmbackenschlitten 40a, 40b der ersten Führung 35 und über eine Langlochführung 24a, 25a, 44a; 24b, 25b, 44b mit den Klemmbackenschlitten 41a, 41b der zweiten Führung 36 verbunden. Bei alternativen Ausführungsformen kann das Drehgelenk auch bei den der zweiten Führung zugeordneten Klemmbackenschlitten angeordnet sein, in diesem Fall ist es dann bei der dargestellten Kombination erforderlich, dass die Langlochführungen bei den der ersten Führung 35 zugeordneten Klemmbackenschlitten angeordnet sind.

Eine Verwendung der Kombination Drehgelenk/Langlochführung ist jedoch nicht zwingend. Zwar müssen die Klemmbacken bei zumindest einer Führung mittels eines Dreh- bzw. Schwenkgelenkes an den entsprechenden Klemmbackenschlitten gehalten sein, die Verwendung einer Langlochführung ist jedoch nicht zwingend erforderlich. So ist es beispielsweise denkbar, dass die Klemmbacken bei einer alternativen Ausführungsform mit den Klemmbackenschlitten gegen eine Rückstellkraft bewegt werden, und bei einem Rückfahren der Klemmbackenschlitten die Rückstellkraft die Klemmbacken zurückbewegt.

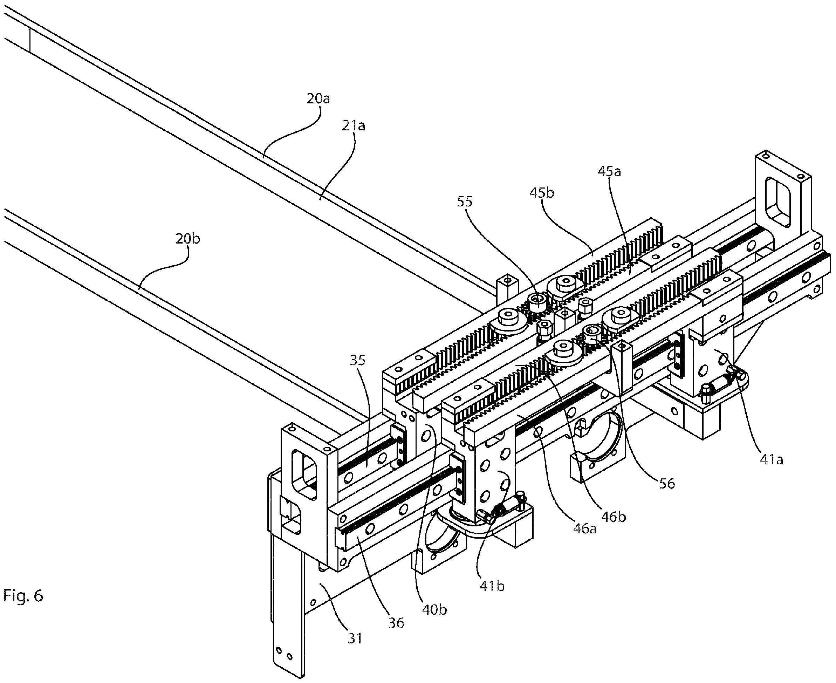

Figur 6 zeigt eine Detailansicht der Klemmbackenführungsanordnung 30 der zweiten Ausführungsform, wobei Teile der Antriebseinheit 50 sowie der Rahmenstruktur zur besseren Ansicht der verbleibenden Bauteile fortgelassen sind. Bei Figur 6 sind die Klemmbacken 20a, 20b weiter zusammengefahren und parallel zueinander ausgerichtet. Bei einem Vergleich der Figuren 5a, 5b und Figur 6 ist zu erkennen, wie durch eine Verschiebung der Klemmbackenschlitten an den Führungen die Stellung der Klemmbacken beeinflusst ist.

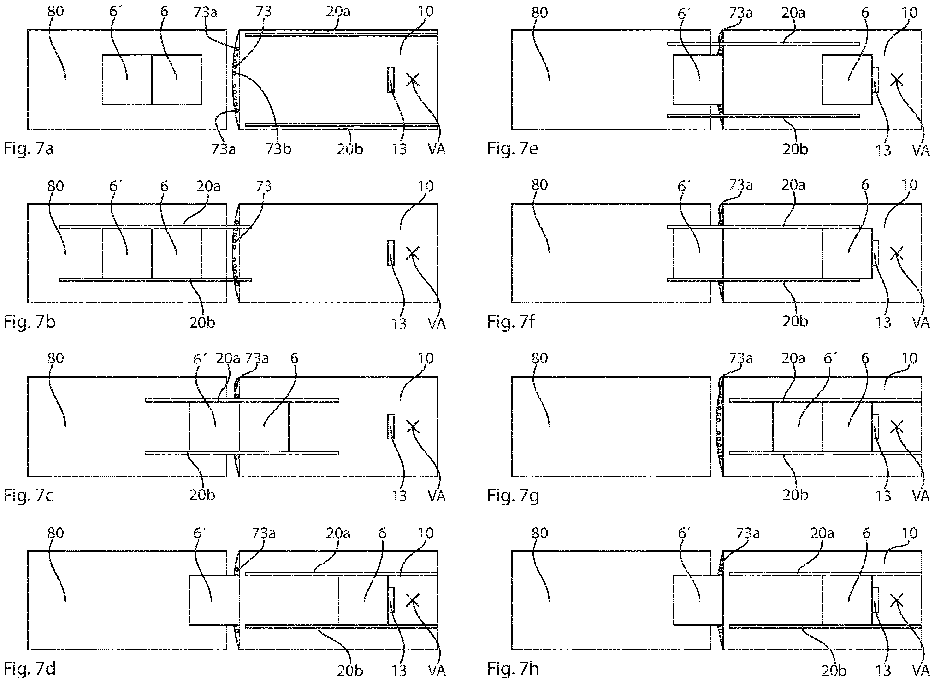

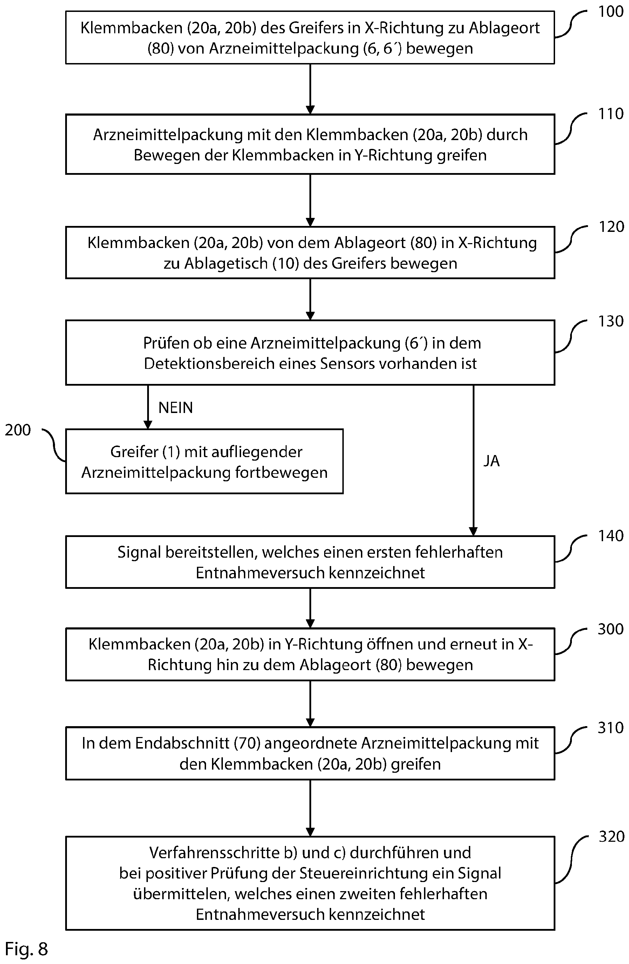

Unter Bezugnahme auf die Figuren 7a - 7h und Figur 8 wird nachfolgend eine bevorzugte Ausführungsform des erfindungsgemäßen Verfahrens beschrieben. Zunächst wird der Greifer derart an einen Ablageort 80 gefahren, dass die auszulagernden Arzneimittelpackungen 6', 6 ungefähr mittig in Bezug auf den Ablagetisch 10 des Greifers angeordnet sind, wie dies in Figur 7a veranschaulicht ist. Bei den Figuren 7a - 7h sind schematisch lediglich einige Bauteile des Greifers dargestellt, die für das Verfahren als solches wesentlich sind. Neben den Klemmbacken 20a, 20b ist der Schiebekopf 13 veranschaulicht, der einen Anschlag für die Arzneimittelpackungen beim Ziehen auf den Ablagetisch 10 darstellt. Wie es in den Figuren angedeutet ist, umfasst der Ablagetisch einen in der zweiten horizontalen Richtung (Y-Richtung) kreisbogenförmig ausgebildeten Endabschnitt, in welchem eine Mehrzahl von spiegelsymmetrisch angeordneten Sensoren 73, 73a, 73b angeordnet ist. Der Ablagetisch selbst wird durch Verschwenken des Tisches um eine Vertikalachse VA vor dem Ablageort in Position gebracht. Zum Bewegen von Arzneimittelpackungen hin auf den Ablagetisch werden zunächst die Klemmbacken 20a, 20b des Greifers in der ersten horizontalen Richtung (X-Richtung) hin zu dem Ablageort der Arzneimittelpackungen 6', 6 bewegt, wie dies in Figur 7b veranschaulicht ist (Schritt 100). Sobald die Klemmbacken entsprechend weit hin zu dem Ablageort bewegt sind, werden sie in der zweiten horizontalen Richtung (Y-Richtung) aufeinander zu bewegt, so dass die Arzneimittelpackungen 6', 6 ergriffen werden (siehe ebenfalls Figur 7b, Schritt 110). Sobald die Arzneimittelpackungen ergriffen sind, werden in einem Schritt 120 die Klemmbacken 20a, 20b von dem Ablageort 80 in der ersten horizontalen Richtung (X-Richtung) hin zu dem Ablagetisch 10 des Greifers bewegt, was in Figur 7c veranschaulicht ist. Um die Arzneimittelpackungen auf den Ablagetisch zu bewegen, werden die Klemmbacken 20a, 20b in der ersten horizontalen Richtung (X-Richtung) in ihre Ausgangslage verfahren, wobei die gegriffenen Arzneimittelpackungen bzw. die gegriffene Arzneimittelpackung bei dem Schiebekopf 13 anschlagen bzw. anschlägt. Sobald die vollständige Rückbewegung der Klemmbacken durchgeführt ist, wird in einem Schritt 130 geprüft, ob eine Arzneimittelpackung 6' in dem Detektionsbereich eines (oder mehrerer) der Sensoren 73, 73a, 73b vorhanden ist, wobei darüber auch die ungefähre Lage der Arzneimittelpackung bestimmbar ist. Die Detektion dahingehend, ob eine Arzneimittelpackung in dem Endabschnitt angeordnet ist, hängt von der Art des verwendeten Sensors ab, wobei insbesondere Lichttaster, Lichtsensoren und taktile Sensoren in Frage kommen. Wie genau das Vorhandensein eines Gegenstandes in Abhängigkeit von dem speziellen Sensortyp detektiert wird, ist dem Fachmann bekannt und wird hier nicht näher erläutert. Wenn die Prüfung ergibt, dass keine Arzneimittelpackung in dem Endabschnitt aufliegt, wird der Greifer nachfolgend zu dem Ablageort der auf dem Ablagetisch aufliegenden Arzneimittelpackung bzw. -packungen bewegt (Schritt 200). Sollte sich jedoch herausstellen, dass eine Arzneimittelpackung in dem Endabschnitt angeordnet ist, wie dies in Figur 7d dargestellt ist, wird ein Signal bereitgestellt, welches einen ersten fehlerhaften Entnahmeversuch der Arzneimittelpackung von dem Ablageort 80 auf den Ablagetisch 10 signalisiert (Schritt 140). Bei der in Figur 7d dargestellten Situation verhält es sich so, dass die Arzneimittelpackung 6` nicht vollständig auf den Ablagetisch 10 bewegt wurde, sondern noch größtenteils bei dem Ablageort 80 angeordnet ist, jedoch auch teilweise in dem Endabschnitt angeordnet ist. Würde der Greifer bei dieser Situation verfahren werden, könnte es vorkommen, dass die Arzneimittelpackung 6' von dem Ablageort fällt und im schlimmsten Fall nachfolgende Bewegungsvorgänge des Bediengerätes blockiert. Das bereitgestellte Signal könnte zum Beispiel bewirken, dass ein Verfahren des Greifers nicht möglich ist und das Eingreifen von Bedienpersonal notwendig ist. Alternativ ist es jedoch auch denkbar, dass dieses Signal einen zweiten Entnahmeversuch mittels des Greifers initiiert. Dazu werden in einem Schritt 300 die Klemmbacken 20a, 20b in der zweiten horizontalen Richtung (Y-Richtung) geöffnet und in die erste horizontale Richtung (X-Richtung) hin zu dem Ablageort bewegt. Bei der beschriebenen Ausführungsform wird eine Mehrzahl von Sensoren in dem Endabschnitt verwendet, so dass die Steuereinrichtung anhand der aktivierten Sensoren bewerten kann, wie weit die Klemmbacken in der zweiten horizontalen Richtung (Y-Richtung) auseinander bewegt werden müssen. Wird lediglich eine geringere Zahl an Sensoren verwendet, kann einfach so verfahren werden, dass die Klemmbacken in der zweiten horizontalen Richtung (Y-Richtung) maximal aufgefahren werden. Sobald die Klemmbacken in die erste horizontale Richtung (X-Richtung) entsprechend weit hin zu dem Ablageort bewegt wurden, wird versucht, die liegengebliebene Arzneimittelpackung 6' mit den Klemmbacken zu greifen (Schritt 310), und zwar indem die Klemmbacken erneut in der zweiten horizontalen Richtung (Y-Richtung) zugefahren werden. Anschließend werden die Verfahrensschritte b) und c), das heißt das Bewegen in die erste horizontale Richtung (X-Richtung) hin zu dem Ablagetisch und das Prüfen des Endabschnittes auf eine aufliegende Arzneimittelpackung, wiederholt (Schritt 320). Wenn festgestellt wird, dass noch immer eine Arzneimittelpackung in dem Endabschnitt aufliegt, wird ein Signal bereitgestellt, welches einen zweiten fehlerhaften Entnahmeversuch kennzeichnet (Figur 7h). In diesem Fall kann evtl. ein dritter Entnahmeversuch durchgeführt werden, oder eine Bewegung des Greifers wird verhindert und das Eingreifen von Bedienpersonal angefordert.

## Patentansprüche

1. Greifer (1) für eine Kommissioniervorrichtung mit horizontalen Lagerflächen zur Lagerung von Arzneimittelpackungen, aufweisend:
eine Steuereinrichtung (4),
einen sich in einer ersten horizontalen Richtung (X-Richtung) und einer zweiten horizontalen Richtung (Y-Richtung), orthogonal zur ersten horizontalen Richtung erstreckenden Ablagetisch (10) mit einem Endabschnitt (70) mit einer sich in der zweiten horizontalen Richtung bogenförmig erstreckenden Stirnseite (71), wobei der Endabschnitt (70) die Ein- und Auslagerungsstirnseite bildet, wobei der Ablagetisch (10) mit dem Endabschnitt (70) eine obere Auflagefläche definieren,
eine über dem Ablagetisch (10) angeordnete und in der ersten horizontalen Richtung bewegbare Transporteinrichtung (20a, 20b) zum Bewegen von Arzneimittelpackungen von einer horizontalen Lagerfläche auf den Ablagetisch (10),
**dadurch gekennzeichnet, dass** der Greifer (1) mindestens drei, mit der Steuereinrichtung (4) gekoppelte und in dem Endabschnitt (70) unterhalb der Auflagefläche angeordnete Sensoren (73, 73a, 73b) zum Bestimmen des Vorhandenseins einer Arzneimittelpackung umfasst, wobei die Sensoren in der zweiten horizontalen Richtung beabstandet voneinander angeordnet sind und wobei in der zweiten horizontalen Richtung äußere Sensoren (73a) von zumindest einem in der zweiten horizontalen Richtung weiter innen angeordneten Sensor (73b) in der ersten horizontalen Richtung beabstandet angeordnet sind, so dass die Anordnung der Sensoren an der sich bogenförmig erstreckenden Stirnseite (71) orientiert ist.

2. Greifer (1) für eine Kommissioniervorrichtung mit horizontalen Lagerflächen zur Lagerung von Arzneimittelpackungen nach Anspruch 1, **dadurch gekennzeichnet, dass** die Sensoren (73, 73a, 73b) derart in der ersten horizontalen Richtung (X-Richtung) voneinander beabstandet sind, dass die Sensoren einen im wesentlichen gleichen Abstand zur bogenförmigen Stirnseite (71) aufweisen.

3. Greifer (1) für eine Kommissioniervorrichtung mit horizontalen Lagerflächen zur Lagerung von Arzneimittelpackungen nach Anspruch 1 oder 2, **dadurch gekennzeichnet, dass** die Transporteinrichtung zwei über dem Ablagetisch (10) angeordnete langgestreckte, sich in der ersten horizontalen Richtung (X-Richtung) erstreckende Klemmbacken (20a, 20b) mit einander zugewandten Klemmflächen (21a, 21b) umfasst, wobei zumindest eine der Klemmbacken zusätzlich zumindest abschnittsweise in der zweiten horizontalen Richtung bewegbar ist.

4. Greifer (1) für eine Kommissioniervorrichtung mit horizontalen Lagerflächen zur Lagerung von Arzneimittelpackungen nach einem der Ansprüche 1 - 3, **dadurch gekennzeichnet, dass** die Sensoren (73, 73a, 73b) spiegelsymmetrisch in Bezug auf eine sich in der ersten horizontalen Richtung (X-Richtung) erstreckende Mittelachse (MA) des Ablagetisches (10) angeordnet sind.

5. Greifer (1) für eine Kommissioniervorrichtung mit horizontalen Lagerflächen zur Lagerung von Arzneimittelpackungen nach einem der Ansprüche 1 - 4, **dadurch gekennzeichnet, dass** der Endabschnitt als von dem Ablagetisch (10) lösbare Sensorbaugruppe (72) ausgebildet ist.

6. Greifer (1) für eine Kommissioniervorrichtung mit horizontalen Lagerflächen zur Lagerung von Arzneimittelpackungen nach einem der Ansprüche 1 - 5, **dadurch gekennzeichnet, dass** die bogenförmige Stirnseite (71) des Endabschnitts (70) kreisbogenförmig ausgebildet ist, wobei der Mittelpunkt des entsprechenden Kreises in einer vertikalen Drehachse (VA) des Ablagetisches (10) liegt.

7. Greifer (1) für eine Kommissioniervorrichtung mit horizontalen Lagerflächen zur Lagerung von Stückgütern nach einem der Ansprüche 3 - 6, **dadurch gekennzeichnet, dass** der Greifer ferner aufweist:
eine Klemmbackenführungsanordnung (30) mit
einer Rahmenstruktur (31, 32, 33a, 33b),
zumindest einer ersten und einer zweiten Führung (35, 36), die sich parallel und in der ersten horizontalen Richtung (X) beabstandet voneinander in der zweiten horizontalen Richtung (Y) quer zur ersten horizontalen Richtung erstrecken, und
zumindest vier mit den Führungen (35, 36) gekoppelten und in der zweiten horizontalen Richtung (Y) angetriebenen Klemmbackenschlitten (40a, 40b, 41a, 41b), wobei jeweils zwei erste Klemmbackenschlitten (40a, 40b) der ersten Führung (35) und zwei zweite Klemmbackenschlitten (41a, 41b) der zweiten Führung (36) zugeordnet sind und wobei jeweils zumindest zwei in der ersten horizontalen Richtung (X) beabstandete Klemmbackenschlitten (40a, 41a; 40b, 41b) mit einer Klemmbacke (20a, 20b) gekoppelt sind, und
eine mit der Klemmbackenführungsanordnung gekoppelte Antriebseinheit (60, 61a, 61b, 62a, 62b), mit der die Klemmbackenführungsanordnung (30) in der ersten horizontalen Richtung (X) angetrieben ist.

8. Verfahren zum Verifizieren eines Bewegens von Arzneimittelpackungen (6, 6') auf einen Ablagetisch (10) eines Greifers (1) nach einem der Patentansprüche 1 - 7, wobei
a) die Transporteinrichtung in der ersten horizontalen Richtung (X-Richtung) hin zu einem Ablageort (80) von zumindest einer Arzneimittelpackung (6, 6') bewegt wird und die zumindest eine Arzneimittelpackung gegriffen wird,
b) die Transporteinrichtung von dem Ablageort (80) in der ersten horizontalen Richtung (X-Richtung) hin zu dem Ablagetisch (10) bewegt wird,
c) nach Bewegen der Transporteinrichtung in der ersten horizontalen Richtung (X-Richtung) mittels der Sensoren (73, 73a, 73b) in dem Endabschnitt (70) geprüft wird, ob eine Arzneimittelpackung (6') in dem Detektionsbereich der Sensoren vorhanden ist, und
d) sofern diese Prüfung positiv ausfällt, ein Signal bereitgestellt wird, welches einen ersten fehlerhaften Entnahmeversuch kennzeichnet.

9. Verfahren zum Verifizieren eines Bewegens von Arzneimittelpackungen (6, 6') auf einen Ablagetisch (10) eines Greifers (1) nach Anspruch 8, wobei die Transporteinrichtung zwei über dem Ablagetisch (10) angeordnete langgestreckte, sich in der ersten horizontalen Richtung (X-Richtung) erstreckende Klemmbacken (20a, 20b) mit einander zugewandten Klemmflächen (21a, 21b) umfasst,
**dadurch gekennzeichnet, dass** bei positiver Prüfung gemäß Schritt d) die Klemmbacken (20a, 20b) in der zweiten horizontalen Richtung (Y-Richtung) geöffnet und erneut in der ersten horizontalen Richtung (X-Richtung) hin zu dem Ablageort (80) bewegt werden,
eine in dem Endabschnitt (70) angeordnete Arzneimittelpackung mit den Klemmbacken (20a, 20b) ergriffen wird,
die Verfahrensschritte b) und c) durchgeführt werden, und
bei positiver Prüfung ein Signal bereitgestellt wird, welches einen zweiten fehlerhaften Entnahmeversuch kennzeichnet.

10. Verfahren zum Verifizieren eines Bewegens von Arzneimittelpackungen (6, 6') auf einen Ablagetisch (10) eines Greifers (1) nach einem der Ansprüche -8 oder 9,
**dadurch gekennzeichnet, dass** bei dem Bewegen der zumindest einen Arzneimittelpackung (6) hin zu dem Ablagetisch mittels der in dem Ablagetisch angeordneten Sensoren (73, 73a, 73b) die Breite einer Arzneimittelpackung (6) ermittelt wird,
die ermittelte Breite mit einer der Steuereinrichtung (4) bekannten Soll-Breite verglichen wird, und
bei Überschreiten einer Grenzabweichung zwischen ermittelter Breite und Soll-Breite einer Arzneimittelpackung ein entsprechendes Signal bereitgestellt wird.

11. Verfahren zum Verifizieren eines Bewegens von Arzneimittelpackungen (6, 6') auf einen Ablagetisch (10) eines Greifers (1) nach Anspruch 10,
**dadurch gekennzeichnet, dass** nach Bereitstellen eines auf ein Überschreiten einer Grenzabweichung hinweisenden Signals der Greifer (1) hin zu einer Entladestation bewegt wird und die aufliegenden Arzneimittelpackungen der Entladestation übergeben werden.

12. Verwendung einer Sensorbaugruppe (72) mit
einer sich in einer zweiten horizontalen Richtung (Y-Richtung), orthogonal zu einer ersten horizontalen Richtung (X-Richtung) erstreckenden bogenförmig erstreckenden Stirnseite (71) und
mindestens drei unter einer Oberfläche der Sensorbaugruppe angeordneten Sensoren (73, 73a, 73b) zum Bestimmen des Vorhandenseins einer Arzneimittelpackung, wobei die Sensoren in der zweiten horizontalen Richtung beabstandet voneinander angeordnet sind und wobei in der zweiten horizontalen Richtung äußere Sensoren (73a) von zumindest einem in der zweiten horizontalen Richtung weiter innen angeordneten Sensor (73b) in der ersten horizontalen Richtung beabstandet angeordnet sind, so dass die Anordnung der Sensoren an der sich bogenförmig erstreckenden Stirnseite (71) orientiert ist,
und
einer Schnittstelle zum Anschließen der Sensorbaugruppe an eine Steuereinrichtung
zum Verifizieren eines Bewegens von Arzneimittelpackungen (6, 6') auf einen Ablagetisch (10) eines Greifers (1) einer Kommissioniervorrichtung für Arzneimittel.

## Claims

1. Gripper (1) for a picking device with horizontal storage surfaces for storage of drug packages, comprising:
a control device (4),
a tray table (10) extending in a first horizontal direction (X-direction) and a second horizontal direction (Y-direction) orthogonal to the first horizontal direction, having an end portion (70) with an arcuate front (71) extending in the second horizontal direction, said end portion (70) forming the loading and unloading front, said tray table (10) defining an upper support surface with said end portion (70),
a transport device (20a, 20b) arranged above the tray table (10) and movable in the first horizontal direction for moving drug packages from a horizontal storage surface onto the tray table (10),
**characterized in that** the gripper (1) comprises at least three sensors coupled to a control device (4) arranged in the end portion (70) below the support surface for determining the presence of a drug package, wherein the sensors are arranged at a distance from one another in the second horizontal direction and wherein in the second horizontal direction outer sensors (73a) are arranged at a distance in the first horizontal direction from at least one sensor (73b) arranged further inside in the Y-direction, such that the arrangement of the sensors is oriented towards the front (71) extending in an arcuate manner.

2. Gripper (1) for a picking device having horizontal storage surfaces for storing drug packages according to claim 1, **characterized in that** the sensors (73, 73a, 73b) are arranged at a distance from one another in the first horizontal direction (X-direction) such that the sensors substantially are at the same distance from the arcuate front (71) .

3. Gripper (1) for a picking device having horizontal storage surfaces for the storage of drug packages according to claim 1 or 2, **characterized in that** the transport device comprises two elongated clamping jaws (20a, 20b) extending in the first horizontal direction (X-direction) arranged above the tray table (10), with clamping surfaces (21a, 21b) facing each other, wherein at least one of the clamping jaws is additionally movable at least in sections in the second horizontal direction.

4. Gripper (1) for a picking device with horizontal storage surfaces for the storage of drug packages according to any one of claims 1-3, **characterized in that** the sensors (73, 73a, 73b) are arranged mirror-symmetrically with respect to a central axis (MA) of the tray table (10) extending in the first horizontal direction (X-direction).

5. Gripper (1) for a picking device with horizontal storage surfaces for storing drug packages according to one of claims 1-4, **characterized in that** the end portion is formed as a sensor assembly (72) which is detachable from the tray table (10) .

6. Gripper (1) for a picking device with horizontal storage surfaces for storage of drug packages according to one of claims 1-5, **characterized in that** the arcuate front (71) of the end portion (70) is circularly curved, wherein the center of the corresponding circle is located in a vertical rotary axis (VA) of the tray table (10).

7. Gripper (1) for a picking device with horizontal storage surfaces for storing piece goods according to one of claims 3-6, **characterized in that** the gripper further comprises:
a jaw guide assembly (30) with
a frame structure (31, 32, 33a, 33b),
at least a first and a second guide (35, 36) extending in parallel and in the first horizontal direction (X) spaced from each other in the second horizontal direction (Y) transverse to the first horizontal direction, and
at least four jaw carriages (40a, 40b, 41a, 41b) coupled to the guides (35, 36) and driven in the second horizontal direction (Y), wherein two first jaw carriages (40a, 40b) are assigned to the first guide (35) and two second jaw carriages (41a, 41b) are assigned to the second guide (36) and wherein at least two jaw carriages (40a, 41a; 40b, 41b) spaced apart in the first horizontal direction (X) are coupled to a clamping jaw (20a, 20b), and
a drive unit (60, 61a, 61b, 62a, 62b) coupled to the jaw guide assembly for driving the jaw guide assembly (30) in the first horizontal direction (X).

8. A method of verifying a movement of drug packages (6, 6') onto a tray table (10) of a gripper (1) according to any one of claims 1-7, wherein
a) the transport device is moved in the first horizontal direction (X-direction) to a storage location (80) of at least one drug package (6, 6') and the at least one drug package is gripped,
b) the transport device is moved from the storage location (80) in the first horizontal direction (X-direction) to the tray table (10),
c) after moving the transport device in the first horizontal direction (X-direction) by means of the sensors (73, 73a, 73b) in the end portion (70), it is checked whether a drug package (6') is present in the detection area of the sensors, and
d) if this check is positive, a signal is provided indicating a first erroneous removal attempt.

9. Method for verifying a movement of drug packages (6, 6') onto a tray table (10) of a gripper (1) according to claim 8, wherein the transport device comprises two elongated, clamping jaws (20a, 20b) extending in the first horizontal direction (X-direction) arranged above the tray table (10) with mutually facing clamping surfaces (21a, 21b),
**characterized in that**, in the case of a positive check according to step d), the clamping jaws (20a, 20b) are opened in the second horizontal direction (Y-direction) and moved again in the first horizontal direction (X-direction) to the storage location (80),
a drug package arranged in the end section (70) is gripped by the clamping jaws (20a, 20b),
the method steps b) and c) are carried out, and
if this check is positive, a signal is provided which indicates a second incorrect removal attempt.

10. Method for verifying a movement of drug packages (6, 6') onto a tray table (10) of a gripper (1) according to one of claims 8 or 9,
**characterized in that**, when moving the at least one drug package (6) towards the tray table, the width of a drug package (6) is determined by means of the sensors (73, 73a, 73b) arranged in the tray table,
the determined width is compared with a desired width known to the control device (4), and
when a limit deviation between the determined width and desired width of a drug package is exceeded, a corresponding signal is provided.

11. Method for verifying a movement of drug packages (6, 6') onto a tray table (10) of a gripper (1) according to claim 10,
**characterized in that** after providing a signal indicative of an exceeding of a limit deviation, the gripper (1) is moved towards an unloading station and the drug packages present are transferred to the unloading station.

12. Use of a sensor assembly (72) with
a front (71) extending in an arcuate manner in the second horizontal direction (Y-direction) extending orthogonal to a first horizontal direction (X-direction) and
at least three sensors (73, 73a, 73b) arranged under a surface of the sensor assembly for determining the presence of a drug package, wherein the sensors are arranged at a distance from one another in the second horizontal direction
and wherein in the second horizontal direction outer sensors are arranged at a distance in the first horizontal direction from at least one sensor (73b) arranged further inside in the second horizontal direction, such that the arrangement of the sensors is oriented towards the front extending in an arcuate manner,
and
an interface for connecting the sensor assembly to a control device
for verifying a movement of drug packages (6, 6') onto a tray table (10) of a gripper (1) of a picking device for drugs.

## Revendications

1. Préhenseur (1) pour un dispositif de préparation de commandes avec des surfaces de stockage horizontales pour le stockage d'emballages de médicaments, présentant :
un dispositif de commande (4),
une table de dépôt (10) s'étendant dans une première direction horizontale (direction X) et une deuxième direction horizontale (direction Y), orthogonale à la première direction horizontale, avec une section d'extrémité (70) avec une face frontale (71) s'étendant en forme d'arc dans la deuxième direction horizontale, la section d'extrémité (70) formant la face frontale de stockage et de déstockage, la table de dépôt (10) définissant avec la section d'extrémité (70) une surface d'appui supérieure,
un dispositif de transport (20a, 20b) disposé au-dessus de la table de dépôt (10) et mobile dans la première direction horizontale pour déplacer des emballages de médicaments d'une surface de stockage horizontale sur la table de dépôt (10),
**caractérisé en ce que** le préhenseur (1) comprend au moins trois capteurs (73, 73a, 73b) couplés au dispositif de commande (4) et disposés dans la section d'extrémité (70) au-dessous de la surface de support pour déterminer la présence d'un emballage de médicament, dans lequel les capteurs sont espacés les uns des autres dans la deuxième direction horizontale et dans lequel des capteurs extérieurs (73a) sont espacés dans la deuxième direction horizontale d'au moins un capteur (73b) disposé plus à l'intérieur dans la deuxième direction horizontale dans la première direction horizontale, de sorte que la disposition des capteurs est orientée sur la face frontale (71) s'étendant en forme d'arc.

2. Préhenseur (1) pour un dispositif de préparation de commandes avec des surfaces de stockage horizontales pour le stockage d'emballages de médicaments selon la revendication 1, **caractérisé en ce que** les capteurs (73, 73a, 73b) sont espacés les uns des autres dans la première direction horizontale (direction X) de telle sorte que les capteurs présentent une distance sensiblement égale par rapport à la face frontale (71) en forme d'arc.

3. Préhenseur (1) pour un dispositif de préparation de commandes avec des surfaces de stockage horizontales pour le stockage d'emballages de médicaments selon la revendication 1 ou 2, **caractérisée en ce que** le dispositif de transport comprend deux mâchoires de préhension (20a, 20b) allongées, disposées au-dessus de la table de dépôt (10) et s'étendant dans la première direction horizontale (direction X), avec des surfaces de préhension (21a, 21b) tournées l'une vers l'autre, au moins l'une des mâchoires de préhension étant en outre mobile au moins par sections dans la deuxième direction horizontale.

4. Préhenseur (1) pour un dispositif de préparation de commandes avec des surfaces de stockage horizontales pour le stockage d'emballages de médicaments selon l'une des revendications 1 à 3, **caractérisée en ce que** les capteurs (73, 73a, 73b) sont disposés de manière symétrique par rapport à un axe central (MA) de la table de dépôt (10) s'étendant dans la première direction horizontale (direction X).

5. Préhenseur (1) pour un dispositif de préparation de commandes avec des surfaces de stockage horizontales pour le stockage d'emballages de médicaments selon l'une des revendications 1 à 4, **caractérisée en ce que** la section d'extrémité est conçue comme un ensemble de capteurs (72) pouvant être détaché de la table de dépôt (10).

6. Préhenseur (1) pour un dispositif de préparation de commandes avec des surfaces de stockage horizontales pour le stockage d'emballages de médicaments selon l'une des revendications 1 - 5, **caractérisé en ce que** la face frontale (71) en forme d'arc de la section d'extrémité (70) est réalisée en forme d'arc de cercle, le centre du cercle correspondant étant situé dans un axe de rotation vertical (VA) de la table de dépôt (10).

7. Préhenseur (1) pour un dispositif de préparation de commandes avec des surfaces de stockage horizontales pour le stockage de marchandises unitaires selon l'une des revendications 3 à 6, **caractérisée en ce que** le préhenseur comprend en outre :
une structure de guidage de mâchoires (30) comprenant
une structure de cadre (31, 32, 33a, 33b),
au moins un premier et un deuxième guide (35, 36) s'étendant parallèlement et espacés l'un de l'autre dans la première direction horizontale (X) dans la deuxième direction horizontale (Y) transversale à la première direction horizontale, et
au moins quatre chariots à mâchoires de préhension (40a, 40b, 41a, 41b) couplés aux guides (35, 36) et entraînés dans la deuxième direction horizontale (Y), deux premiers chariots à mâchoires de préhension (40a, 40b) étant respectivement associés au premier guide (35) et deux deuxièmes chariots à mâchoires de préhension (41a, 41b) étant associés au deuxième guide (36), et au moins deux chariots à mâchoires de préhension (40a, 41a ; 40b, 41b) espacés l'un de l'autre dans la première direction horizontale (X) sont couplés à une mâchoire de préhension (20a, 20b), et
une unité d'entraînement (60, 61a, 61b, 62a, 62b) couplée à la structure de guidage de mâchoires, avec laquelle la structure de guidage de mâchoires (30) est entraîné dans la première direction horizontale (X).

8. Procédé de vérification d'un déplacement d'emballages de médicaments (6, 6') sur une table de dépôt (10) d'un préhenseur (1) selon l'une des revendications 1 à 7, dans lequel
a) le dispositif de transport est déplacé dans la première direction horizontale (direction X) vers un emplacement de dépôt (80) d'au moins un emballage de médicament (6, 6') et ledit au moins un emballage de médicament est saisi,
b) le dispositif de transport est déplacé du emplacement de dépôt (80) dans la première direction horizontale (direction X) vers la table de dépôt (10),
c) après avoir déplacé le dispositif de transport dans la première direction horizontale (direction X), on vérifie au moyen des capteurs (73, 73a, 73b) dans la section d'extrémité (70) si un emballage de médicament (6') est présent dans la zone de détection des capteurs, et
d) dans la mesure où ce contrôle est positif, on fournit un signal qui caractérise une première tentative de prélèvement erronée.

9. Procédé de vérification d'un déplacement d'emballages de médicaments (6, 6') sur une table de dépôt (10) d'un préhenseur (1) selon la revendication 8, dans lequel le dispositif de transport comprend deux mâchoires de préhension (20a, 20b) allongées, disposées au-dessus de la table de dépôt (10) et s'étendant dans la première direction horizontale (direction X), avec des surfaces de préhension (21a, 21b) qui se font face,
**caractérisé en ce que**, en cas de contrôle positif selon l'étape d), les mâchoires de préhension (20a, 20b) sont ouvertes dans la deuxième direction horizontale (direction Y) et déplacées à nouveau dans la première direction horizontale (direction X) vers l'emplacement de dépôt (80),
un emballage de médicament disposé dans la section d'extrémité (70) est saisi par les mâchoires de préhension (20a, 20b),
les étapes b) et c) du procédé sont exécutées, et
en cas de vérification positive, un signal est fourni, qui caractérise une deuxième tentative de prélèvement erronée.

10. Procédé de vérification d'un déplacement d'emballages de médicaments (6, 6') sur une table de dépôt (10) d'un préhenseur (1) selon l'une des revendications 8 ou 9,
**caractérisé en ce que**, lors du déplacement dudit au moins un emballage de médicament (6) vers la table de dépôt, la largeur d'un emballage de médicament (6) est déterminée au moyen des capteurs (73, 73a, 73b) disposés dans la table de dépôt,
la largeur déterminée est comparée à une largeur de consigne connue du dispositif de commande (4), et
en cas de dépassement d'un écart limite entre la largeur déterminée et la largeur de consigne d'un emballage de médicament, un signal correspondant est mis à disposition.

11. Procédé de vérification d'un déplacement d'emballages de médicaments (6, 6') sur une table de dépôt (10) d'un préhenseur (1) selon la revendication 10,
**caractérisé en ce qu'**après avoir fourni un signal indiquant un dépassement d'un écart limite, le préhenseur (1) est déplacé vers un poste de déchargement et les emballages de médicaments posés sont transférés au poste de déchargement.

12. Utilisation d'un ensemble de capteurs (72) avec
une face frontale (71) s'étendant en arc de cercle dans une deuxième direction horizontale (direction Y), orthogonale à une première direction horizontale (direction X), et
au moins trois capteurs (73, 73a, 73b) disposés sous une surface de l'ensemble de capteurs pour déterminer la présence d'un emballage de médicament, les capteurs étant disposés à distance les uns des autres dans la deuxième direction horizontale et des capteurs extérieurs (73a) dans la deuxième direction horizontale étant disposés à distance d'au moins un capteur (73b) disposé plus à l'intérieur dans la deuxième direction horizontale dans la première direction horizontale, de sorte que la disposition des capteurs est orientée sur la face frontale (71) s'étendant en forme d'arc,
et
une interface pour connecter l'ensemble de capteurs à un dispositif de commande
pour vérifier un déplacement d'emballages de médicaments (6, 6') sur une table de dépôt (10) d'un préhenseur (1) d'un dispositif de préparation de commandes pour médicaments.
